# EUROPEAN PATENT APPLICATION

(11) **EP 4 733 290 A1**
(43) Date of publication of application: **29.04.2026**
(21) Application number: 24208931.6
(22) Date of filing: 25.10.2024
(51) Int. Cl.: C04B 35/622, C04B 35/626, C04B 35/64

(54) **METHOD FOR OBTAINING SECONDARY REFRACTORY RAW MATERIALS**

(71) Applicant: Refractory Intellectual Property GmbH & Co. KG, 1100 Wien (AT)
(72) Inventor: Leitner, Alexander, 8700 Leoben (AT); Heid, Stefan, 8700 Leoben (AT); Naves Moraes, Matheus, 32210-902 Contagem (BR); Königshofer, Sandra, 8605 St. Lorenzen (AT)
(74) Representative: Eibel, Anna

(57) **Abstract**

The present invention discloses a method for obtaining a secondary refractory raw material comprising the following steps:
1.1. Providing a used refractory product;
1.2. Providing a comminution device comprising a comminution chamber, wherein a vertical axis is defined ranging from the top end to the bottom end of the comminution chamber, the comminution chamber comprising a supply opening located at the top end of the comminution chamber, and a discharge opening located at the bottom end of the comminution chamber, the comminution chamber further comprising at least two rotors being arranged at different heights along the vertical axis of the comminution chamber, each rotor comprising a rotor shaft, each rotor shaft being arranged coaxially with the vertical axis of the comminution chamber, and each rotor comprising a number of impact tools extending into the comminution chamber, wherein the impact tools preferably extend into the comminution chamber in a direction perpendicular to the vertical axis;
1.3. Supplying the used refractory product to the comminution chamber of the comminution device via the supply opening and directing the used refractory product through the comminution chamber;
1.4. Rotating at least two of said rotors in opposite directions of rotation around the vertical axis while the used refractory product is directed through the comminution chamber;
1.5. Impacting the used refractory product with the impact tools of the rotors to crush the used refractory product into grains,
1.6. Directing the grains of the used refractory product out of the comminution chamber via the discharge opening; and
1.7. Obtaining a secondary refractory raw material in the form of grains of the used refractory product.

## Description

The present invention relates to a method for obtaining a secondary refractory raw material from used refractory products, as well as to a secondary refractory raw material and to a method for producing a refractory product.

In the sense of the present invention, the term "refractory product" refers to a product produced from inorganic refractory raw materials, which product preferably has a pyrometric cone temperature equivalent ("Kegelfallpunkt") above 1500°C according to ISO 836 and DIN 51060. The pyrometric cone temperature equivalent ("Kegelfallpunkt") can be determined according to ISO 528 and DIN EN 993-12.

Refractory raw materials are commonly based on inorganic oxides, such as magnesium oxide ("magnesia", MgO), aluminium oxide ("alumina", Al₂O₃), silicon dioxide ("silica", SiO₂), calcium oxide ("calcia", CaO) or chromium oxide ("chromia", Cr₂O₃). Further common raw materials are based on mixed compounds such as magnesia spinel (MgO·Al₂O₃, e.g., stoichiometric spinel MgAl₂O₄), calcium magnesium oxide ("doloma", CaO MgO), or aluminum silicate.

So far, refractory products have mainly been produced using primary (native) refractory raw materials. In the sense of the present invention, the term "primary refractory raw material" (herein also called "native refractory raw material") refers to a refractory raw material that originates from natural resources. A primary refractory material may for example be obtained from mining naturally occurring minerals, followed by beneficiation and treatment steps (such as, e.g., calcination).

The production of primary refractory raw materials typically requires a high input of energy. For example, the main source for the production of magnesia is naturally occurring magnesite (magnesium carbonate, MgCOs). To produce magnesia from magnesite, the magnesite must be calcined to remove the carbon dioxide, requiring heating it to temperatures above 1 ,700°C, which involves a significant input of thermal energy. This production route is disadvantageous firstly for economic reasons, since it is associated with high energy costs, and secondly for ecological reasons, since it is inevitably associated with a considerable formation of carbon dioxide. If the carbon dioxide is released into the atmosphere it contributes to the greenhouse effect and global warming.

To reduce the production of primary refractory raw materials and to save energy and costs, it is desired to recycle used refractory products, i.e., to obtain secondary raw materials from used refractory products and to utilize such secondary raw materials for the production of new refractory products.

In the past, used (or "spent") refractory products were typically landfilled without further use. However, in recent years, attempts have been made to utilize used refractory products as a source for secondary refractory raw materials. In the sense of the present invention, the term "secondary refractory raw material" refers to a refractory raw material originating from a used refractory product, and the term "used refractory product" (herein also called "spent refractory product") refers to a refractory product, such as a refractory brick, that was already in use in an industrial aggregate, such as a high-temperature industrial aggregate for metal, glass or cement production.

Secondary refractory raw materials can be obtained by comminuting, in particular crushing, used refractory products into small particles. This can for example be performed using a jaw crusher (which is typically also used for comminuting natural resources during the production of primary refractory raw materials). Other examples are cone crushers, which crush materials between an oscillating cone and a fixed outer wall, or impact crushers, which use high-speed rotors to hurl materials against stationary surfaces. Particles crushed by above-mentioned conventional methods are typically sorted into fractions according to their grain sizes, e.g., by sieving. The resulting fractions may be subjected to further crushing, sorting or separation steps. Typically, not all fractions resulting from these steps are suitable for use as secondary refractory raw materials.

Another comminution device, used for crushing materials other than used refractory products, is described in EP 2 851 122 B1 and in EP 3 827 899 A.

Secondary refractory raw materials produced by conventional crushing methods, e.g., by using a jaw crusher, a cone crusher, or an impact crusher, are known to differ in their properties compared to primary refractory raw materials. For example, conventionally produced secondary refractory raw materials typically show a lower grain bulk density, a higher porosity and/or a different grain size distribution compared to primary (native) refractory raw materials. As a result, the quality of refractory products produced from such secondary refractory raw materials is negatively affected, resulting in refractory products with worse physical and chemical properties when compared to refractory products produced from primary refractory raw materials.

It is therefore an object of the present invention to provide an efficient method for obtaining secondary refractory raw materials having similar properties to primary refractory raw materials. In particular, it is an object to obtain a similar grain bulk density compared to primary refractory raw materials.

The object is solved by a method comprising the following steps:
1.1. Providing a used refractory product;
1.2. Providing a comminution device comprising a comminution chamber,
   1.2.1. wherein a vertical axis is defined ranging from the top end to the bottom end of the comminution chamber,
   1.2.2. the comminution chamber comprising a supply opening located at the top end of the comminution chamber, and a discharge opening located at the bottom end of the comminution chamber,
   1.2.3. the comminution chamber further comprising at least two rotors being arranged at different heights along the vertical axis of the comminution chamber,
   1.2.4. each rotor comprising a rotor shaft, each rotor shaft being arranged coaxially with the vertical axis of the comminution chamber, and
   1.2.5. each rotor comprising a number of impact tools extending into the comminution chamber, wherein the impact tools preferably extend into the comminution chamber in a direction perpendicular to the vertical axis;
1.3. Supplying the used refractory product to the comminution chamber of the comminution device via the supply opening and directing the used refractory product through the comminution chamber;
1.4. Rotating at least two of said rotors in opposite directions of rotation around the vertical axis while the used refractory product is directed through the comminution chamber;
1.5. Impacting the used refractory product with the impact tools of the rotors to crush the used refractory product into grains,
1.6. Directing the grains of the used refractory product out of the comminution chamber via the discharge opening; and
1.7. Obtaining a secondary refractory raw material in the form of grains of the used refractory product.

It has surprisingly been found that the method according to the present invention allows to obtain a secondary refractory raw material with similar properties to a primary refractory raw material. In particular, it has surprisingly been found that the comminution method according to the present invention results in a higher grain bulk density of the secondary refractory raw material when compared to conventional comminution methods, such as crushing by a jaw crusher, a cone crusher or an impact crusher. A secondary refractory raw material with a high grain bulk density allows for a low porosity, which is advantageous for properties such as the wear resistance of refractory products made from the raw material.

Without being bound to any theories, it is assumed that the feature of rotating at least two of said rotors in opposite directions of rotation while the used refractory product is directed through the comminution chamber leads to high-velocity impacts between the impact tools of the rotors and the used refractory product to be crushed. This might result in highly efficient energy transfer into the used refractory product, which might in turn lead to a breakage of the used refractory material along the mineral phase boundaries, thereby efficiently liberating the mineral grains forming the used refractory product. It has surprisingly been found that the grain bulk density and grain size of the grains obtained by the inventive method are very similar to the grain bulk density and grain size of the primary raw material grains, which had been utilized for producing the refractory product. Therefore, the method according to the present invention allows to obtain a secondary refractory raw material of high quality.

Advantageously, the obtained secondary refractory material can be directly applied for producing new refractory products and due to its high quality, the secondary refractory raw material can be used in a higher amount for the production of new refractory products compared to conventionally produced secondary refractory raw materials. This means that the recycling rate (i.e., the ratio of secondary raw material and total raw material used for producing new refractory products) can be increased by using a secondary refractory raw material obtained by a method according to the present invention, which is advantageous for economic and ecological reasons.

As a first step of the inventive method, a used refractory product is provided. The used refractory product is preferably provided in the form of a granulate (i.e., particles) with a maximum particle size of 100 mm or lower, preferably 80 mm or lower, even more preferably 70 mm or lower. The refractory product may also be provided in the form of a granulate with a maximum particle size of 60 mm or lower, preferably 50 mm or lower. Preferably, the minimum particle size of the granulate of the used refractory product is above 5 mm. For example, the refractory product may be provided in the form of a granulate with a maximum particle size of 80 mm or lower, preferably 70 mm or lower and a minimum particle size above 0 mm, preferably above 5 mm.

It has been found that a maximum input particle size of 100 mm or lower, preferably 80 mm or lower, even more preferably 70 mm or lower, is advantageous for an efficient crushing of the material in the comminution device used in the inventive method. This input particle size has the advantage that only a single crushing cycle (i.e., performing steps 1.3 to 1.6 of the inventive method only once) is sufficient to obtain a high amount of secondary refractory raw material with fully liberated mineral grains, which have a similar grain bulk density and grain size as the primary refractory material, which had been utilized for producing the refractory product. The liberated mineral grains can be directly used for producing new refractory products. If the refractory product is provided with a higher particle size, it can happen that the crushing is less efficient, resulting in a higher fraction of unliberated grains, which means that steps 1.3 to 1.6 of the inventive method need to be repeated once or twice.

A granulate of the used refractory product with a maximum particle size of 100 mm or lower, preferably 80 mm or lower, more preferably 70 mm or lower, can be obtained by first pre-crushing the used refractory product using a conventional method such as, e.g., a jaw crusher, a cone crusher or an impact crusher, preferably a jaw crusher, and then sieving the pre-crushed material into a fraction with a particle size up to 100 mm, preferably up to 80 mm, more preferably up to 70 mm. The sieving can be performed using a sieve with a fitting mesh size. For example, for obtaining particles with a particle size up to 100 mm, a sieve with a mesh size of 100 mm can be used.

According to a preferred embodiment, the used refractory product is a breakout material from the lining of a high-temperature industrial aggregate, preferably a cement rotary kiln, a metallurgical aggregate, or an aggregate for the treatment of molten glass, even more preferably a cement rotary kiln. The metallurgical aggregate may for example be an aggregate used in the steel industry, such as a ladle, a converter or a RH vacuum degasser. The lining of such a high-temperature industrial aggregate is typically provided in the form of refractory bricks.

Therefore, according to a particular embodiment, step 1.1 of the method according to claim 1 may comprise the steps of:
1.1.1 Removing the lining of a high-temperature industrial aggregate, preferably a cement rotary kiln, a metallurgical aggregate, or an aggregate for the treatment of molten glass, to obtain a refractory breakout material;
1.1.2 Pre-crushing the refractory breakout material, preferably by using a jaw crusher, a cone crusher or an impact crusher, to obtain a granulate;
1.1.3 Sieving the granulate into two fractions, the first fraction having a particle size up to a threshold size value and the second fraction having a particle size above said threshold size value, preferably wherein said threshold size value is chosen such that the first fraction of the granulate has a particle size up to 100 mm, preferably up to 80 mm, more preferably up to 70 mm; and
1.1.4 Utilizing the first fraction of the granulate as the used refractory product.

Preferably, the used refractory product stems from the group consisting of used magnesia spinel bricks, used magnesia chromite bricks, used magnesia carbon bricks, used alumina magnesia carbon bricks, used alumina silicon carbide carbon bricks and used doloma bricks. Even more preferably, the used refractory product is selected from used magnesia spinel bricks, used magnesia chromite bricks or used magnesia carbon bricks.

The term "magnesia spinel brick" refers to a fired refractory brick based on magnesia (MgO) and magnesia spinel (MgAl₂O₄). The term "magnesia chromite brick" refers to a fired refractory brick based on magnesia (MgO) and magnesium chromite (MgCr₂O₄). The term "magnesia carbon brick" refers to a carbon-bonded magnesia brick (also called "MgO-C brick" or "MagCarbon brick"). The term "alumina magnesia carbon brick" refers to a carbon-bonded refractory brick based on magnesia (MgO) and magnesia spinel (MgAl₂O₄). The term "alumina silicon carbide carbon brick" refers to a carbon-bonded refractory brick based on alumina (Al₂O₃) and silicon carbide (SiC). The term "doloma brick" refers to a fired refractory brick based on calcium magnesium oxide ("doloma", CaO MgO). According to a particularly preferred embodiment, the used refractory product is a breakout material from the lining of a cement rotary kiln and is derived from used magnesia spinel bricks.

The comminution device used according to the present invention comprises a comminution chamber having a vertical axis ranging from the top end to the bottom end. Preferably, the comminution chamber has a cylindrical or conical shape. If the comminution chamber has a cylindrical *or conical* shape, the vertical axis corresponds to the rotational axis of the comminution chamber.

Preferably, the comminution chamber has a cylindrical shape (i.e., is a "cylindrical comminution chamber"), preferably having a diameter between 1 m and 2.5 m, more preferably between 1 m and 2 m, even more preferably between 1 m and 1.5 m. Preferably, the comminution chamber has a height between 1.5 m and 3 m, preferably between 1.5 m and 2.5 m. These dimensions allow a high throughput of the used refractory product and a good handling and transportability of the comminution device.

In some embodiments, the comminution chamber may have a conical shape. If the comminution chamber has a conical shape, it is preferred that the radius of the comminution chamber wall increases from the top end to the bottom end. Thereby, it can be ensured that the used refractory product to be crushed is not collecting in the area of the comminution chamber wall but is always falling into the range of action of the impact tools, where the material is broken down.

The comminution chamber described herein comprises a supply opening located at the top end of the comminution chamber, which is used for supplying the used refractory product into the comminution chamber. Further, the comminution chamber comprises a discharge opening located at the bottom end of the comminution chamber, which is used for retrieving the crushed material out of the comminution chamber.

According to a specific embodiment, the comminution device described herein may comprise a delivery cone arranged above the supply opening of the comminution chamber, to supply the used refractory product material into the comminution chamber. If such a delivery cone is provided, the delivery cone preferably covers the central region of the rotors, in particular the rotor shafts, to ensure a particularly smooth material supply into the range of action of the impact tools of the rotors. The comminution device may additionally comprise an inlet funnel to supply the used refractory product material into the delivery cone.

The comminution chamber described herein comprises at least two rotors being arranged at different heights along the vertical axis of the comminution chamber. In other words, the rotors are arranged sequentially, i.e., one below the other and distanced from each other, along the vertical axis of the comminution chamber in direction from the top end to the bottom end.

Each rotor comprises a rotor shaft and each rotor shaft is arranged coaxially with the vertical axis of the comminution chamber. The phrase "coaxially with the vertical axis of the comminution chamber" means that the rotational axis of each rotor shaft coincides with the vertical axis of the comminution chamber. The rotor shafts preferably have a cylindrical shape. Preferably, the diameters of the rotor shafts increase from rotor to rotor, when going from the rotor being arranged closest to the top end of the comminution chamber to the rotor being arranged closest to the bottom end of the comminution chamber. In other words, when looking at a cross section of the comminution chamber at a plane normal to the vertical axis and at the height of the rotor being arranged closest to the bottom end of the comminution chamber, the rotor shafts are arranged concentrically around a center point, the center point being defined by the vertical axis intersecting the cross section.

For rotating the rotors around the vertical axis of the comminution chamber, the comminution device described herein may comprise one or more drive systems. Preferably, each rotor is connected to a separate drive system, preferably via its rotor shaft. Providing a separate drive system for each rotor allows to drive each rotor independently of the other rotors, which is advantageous for individually controlling the direction of rotation and rotational speed of the rotors. The rotor drive systems may be located in a separate drive unit, which may be arranged below the bottom end of the comminution device, wherein each rotor is connected to its drive system via its rotor shaft.

Each rotor comprises a number of impact tools extending into the comminution chamber. The term "a number of impact tools" herein refers to at least two impact tools. Preferably, each rotor has at least 4 impact tools, even more preferably at least 6 impact tools. Each rotor may have up to 8, or up to 10, or up to 20 impact tools.

The impact tools of each rotor extend into the comminution chamber, so that the impact tools hit the used refractory product while the used refractory product is directed through the comminution chamber. Preferably, the impact tools of each rotor extend into the comminution chamber in a direction perpendicular to the vertical axis, which has the advantage that the impact tools extend as far as possible towards the inner wall of the comminution chamber.

Preferably, the impact tools are rectangular blocks made of steel and/or ceramic materials and/or composite materials comprising metals and ceramic materials. The impact tools may preferably have a length of 20 cm to 80 cm, preferably 20 cm to 60 cm, more preferably 30 cm to 40 cm.

The impact tools may be mounted directly on the rotor shafts of each rotor. Alternatively, each rotor may comprise a fastening unit for holding the impact tools, wherein the fastening unit is mounted on the rotor shaft of each rotor and wherein the impact tools are attached to said fastening unit. Preferably, the impact tools are attached to the fastening unit via holding means located on the fastening unit and attaching means located on the impact tools. Preferably, the holding means of the fastening unit and the attaching means of the impact tools are designed such that the impact tools can be reversibly attached to the fastening unit. This allows for an easy exchange of the impact tools, if necessary.

For example, the holding means of the fastening unit may consist of several cylindrical elements having a vertical axis parallel to the vertical axis of the comminution chamber, said cylindrical elements being arranged around the rotor shaft of each rotor and with a distance to said rotor shaft. To attach the impact tools to the cylindrical elements of the fastening unit, each impact tool may comprise attaching means in the form of a cylindrical hole with a diameter larger than the diameter of a cylindrical element of the fastening unit, so that the impact tool can be attached to said cylindrical element via said cylindrical hole.

Thus, according to a preferred embodiment, the impact tools are rectangular blocks made of steel and/or ceramic materials and/or composite materials comprising metals and ceramic materials, comprising at least one attaching means, such as a cylindrical hole in the rectangular block, for attaching the impact tools to the fastening unit of each rotor. Preferably the cylindrical hole is located close to a first end of the rectangular block. On said first end, the rectangular block may have rounded edges.

According to a preferred embodiment, the number of impact tools per rotor increases from the rotor being arranged closest to the top end of the comminution chamber to the rotor being arranged closest to the bottom end of the comminution chamber. This means that preferably, the rotor being arranged closest to the bottom end of the comminution chamber has a higher number of impact tools, than the rotor being arranged closest to the top end of the comminution chamber. In a particular embodiment, the number of impact tools increases monotonically from rotor to rotor when going from the rotor being arranged closest to the top end of the comminution chamber to the rotor being arranged closest to the bottom end of the comminution chamber, so that the rotor being arranged closest to the top end of the comminution chamber has the lowest number of impact tools, and the rotor being arranged below the rotor located closest to the top end of the comminution chamber has the second lowest number of impact tools, and so on, and the rotor being arranged closest to the bottom end of the comminution chamber has the highest number of impact tools of all rotors.

Increasing the number of impact tools from the top to the bottom end of the comminution chamber is advantageous, since the number of impacts between the used refractory product to be crushed and the impact tools is increased from the top to the bottom end of the comminution chamber, resulting in an increasing impact energy on the used refractory product, thus leading to an efficient breakdown of the material.

The impact tools of each rotor may all be placed within a plane perpendicular to the vertical axis, i.e., on the same height level along the vertical axis. However, it is also possible that the impact tools are placed on various height levels on a rotor, such as two or three height levels along the vertical axis. This means that a rotor may, for example, have two or three levels of impact tools arranged at different heights on the rotor. For example, the impact tools of the rotor located closest to the bottom end of the comminution chamber may be placed on two or three height levels on that rotor, while the impact tools of the other rotors are placed on one height level. If the impact tools are placed on several height levels, the impact tools may be placed offset to one another in these height levels. This allows for a particularly effective and homogeneous comminution of the used refractory product.

According to the inventive method, the used refractory product is directed through the comminution chamber, preferably by gravitational forces, and thereby collides with the impact tools of the rotors, leading to a breakup of the material. While the used refractory product is directed through the comminution chamber, at least two of said rotors are rotated in opposite directions of rotation around the vertical axis of the comminution chamber. In other words, at least one of the rotors is rotated in clockwise direction and at least one of the rotors is rotated in counterclockwise direction.

The opposite directions of rotation lead to high-speed impacts between the used refractory product to be separated and the impact tools, because the particles of the used refractory product which are accelerated by the impact tools of a rotor collide frontally with the impact tools of the next rotor, rotating in the opposite direction.

Preferably, all rotors rotate in alternating directions sequentially when going from the rotor arranged closest to the top end of the comminution chamber to the rotor arranged closest to the bottom end of the comminution chamber. According to this embodiment, if a first rotor being arranged closest to the top end of the comminution chamber rotates in a given direction (e.g., clockwise), a second rotor, being arranged directly below said first rotor, will rotate in opposite direction compared to the first rotor (e.g., counterclockwise), while a third rotor, being arranged directly below the second rotor, will rotate in opposite direction compared to the second rotor (e.g., again clockwise), and so on.

It is also possible that a first rotor being arranged closest to the top end of the comminution chamber and a second rotor being arranged directly below the first rotor both rotate in a same given direction (e.g., clockwise), while a third rotor, being arranged directly below the second rotor, rotates in opposite direction compared to the first and second rotor (e.g., counterclockwise).

Thus, according to a preferred embodiment, the at least two rotors of the comminution chamber described herein consist of a first rotor, a second rotor and a third rotor, the first rotor being arranged closest to the top end of the comminution chamber, the third rotor being arranged closest to the bottom end of the comminution chamber, and the second rotor being arranged between the first rotor and the third rotor,
- wherein the second rotor is rotated in opposite direction of rotation than the first rotor, and preferably wherein the third rotor is rotated in opposite direction of rotation than the second rotor, or
- wherein the first rotor and the second rotor are rotated in the same direction of rotation and the third rotor is rotated in opposite direction of rotation than the first rotor and the second rotor.

More preferably, the at least two rotors of the comminution chamber described herein consist of a first rotor, a second rotor and a third rotor, the first rotor being arranged closest to the top end of the comminution chamber, the third rotor being arranged closest to the bottom end of the comminution chamber, and the second rotor being arranged between the first rotor and the third rotor, wherein the second rotor is rotated in opposite direction of rotation than the first rotor, and the third rotor is rotated in opposite direction of rotation than the second rotor.

Preferably, the rotational speed of the rotors decreases from the rotor located closest to the top end of the comminution chamber to the rotor located closest to the bottom end of the comminution chamber. This means that preferably, the rotor being arranged closest to the top end of the comminution chamber has a higher rotational speed than the rotor being arranged closest to the bottom end of the comminution chamber. In a particular embodiment, the rotational speed of the rotors decreases monotonically from rotor to rotor when going from the rotor being arranged closest to the top end of the comminution chamber to the rotor being arranged closest to the bottom end of the comminution chamber, so that the rotor being arranged closest to the top end of the comminution chamber has the highest rotational speed, and the rotor being arranged below the rotor located closest to the top end of the comminution chamber has the second highest rotational speed, and so on, and the rotor being arranged closest to the bottom end of the comminution chamber has the lowest rotational speed of all rotors.

Decreasing the rotational speed of the rotors from the rotor being arranged closest to the top end of the comminution chamber to the rotor being arranged closest to the bottom end of the comminution chamber has the advantage that the impact energy between the particles of the used refractory product and the impact tools is decreased while the used refractory product is directed through the comminution chamber. This allows to minimize an undesired formation of very fine particles and/or dust.

It was found that the opposite directions of rotation, as described above, preferably together with an increasing number of impact tools and preferably decreasing rotational speeds of the rotors, when going from the top to the bottom end of the comminution device, leads to a particularly effective comminution of the used refractory product.

According to a preferred embodiment, the rotational speed of said rotors is set to a value between 300 revolutions per minute (RPM) to 2000 revolutions per minute, preferably between 300 revolutions per minute to 1600 revolutions per minute, more preferably between 300 revolutions per minute to 700 revolutions per minute. For example, if the comminution chamber comprises three rotors and the rotational speed decreases from the rotor located closest to the top end of the comminution chamber to the rotor located closest to the bottom end of the comminution chamber, then the first rotor (being located closest to the top end) may be operated at a rotational speed of 650 revolutions per minute, while the second rotor (being located directly below the first rotor) may be operated at a rotational speed of 650 revolutions per minute or 300 revolutions per minute and the third rotor (being located closest to the bottom end), may be operated at a rotational speed of 300 revolutions per minute.

Preferably, the rotational speed of the rotors is chosen such that the impact tools rotate at an absolute velocity between 20 m/s and 200 m/s, preferably between 23 m/s and 157 m/s. The absolute velocity of the impact tools ("tip speed") can be calculated using the rotational speed and the perimeter of an imaginary circle generated by the rotating impact tools.

As described above, the used refractory product is crushed into small grains due to the impacts with the impact tools of the rotors.

To further improve the impact frequency between the impact tools and the used refractory product, the comminution chamber described herein may comprise deflection ribs extending into the comminution chamber and being arranged annularly on the inside of the comminution chamber wall, preferably at different heights of the comminution chamber. Such deflection ribs have the advantage that the stream of the used refractory product is even more efficiently directed into the range of action of the impact tools, preventing that material bypasses the rotors without touching the impact tools. The deflection ribs are preferably located at the heights of the rotors or at height between the heights of the rotors on the comminution chamber wall.

According to the inventive method, the crushed grains of the used refractory product are directed out of the comminution chamber via the discharge opening. The discharge opening may be connected to a material discharge funnel or a screw conveyer for directing the crushed grains of the used refractory product to a collection chamber, such as a big bag. The crushed grains of the used refractory product may be directed out of the comminution chamber through the discharge opening simply by gravitational forces and/or by an underpressure generated while operating the comminution device.

During the breakup of the used refractory material in the comminution chamber, dust particles may be generated. Since a high amount of dust may have negative impacts on the operation of the impact tools, it is preferred to remove the dust generated inside the comminution chamber during operation. Therefore, the comminution chamber described herein may be equipped with one or more dust outlets. Such dust outlets may be located close to the bottom of the comminution chamber, for example close to the discharge opening. The dust outlet may also be located downstream of the discharge opening.

According to the inventive method, a secondary refractory raw material is obtained in step 1.7 in the form of grains of the used refractory product.

Preferably, the secondary refractory raw material has a grain size ranging up to a certain threshold size value. The threshold size value preferably ranges from 5 mm to 7 mm, even more preferably the threshold size value is 5 mm or 6 mm. In other words, it is preferred that the grains of the secondary refractory raw material have a maximum grain size of 5 mm to 7 mm, preferably a maximum size of 5 mm or 6 mm. A secondary refractory raw material with grains with this maximum grain size can be directly used for producing new refractory products, since also primary refractory raw materials are provided with such a maximum grain size.

It is possible that the grains of the used refractory product resulting from a first comminution cycle (i.e., from performing steps 1.3 to 1.6 once) comprise grains having a larger grain size than the threshold size value. If this is the case, the secondary refractory raw material can preferably be obtained in step 1.7 by separating the grains of the used refractory product resulting from step 1.6 into two grain fractions, the first grain fraction having a grain size up to said threshold size value and the second grain fraction having a grain size above said threshold size value, wherein the first grain fraction represents the secondary refractory raw material, and wherein said threshold size preferably ranges from 5 mm to 7 mm, even more preferably said threshold size value is 5 mm or 6 mm.

The separation can for example be performed using a sieve with a mesh size fitting to the threshold size value. Herein, the grain size is determined by sieve analysis according to DIN 66165-1 and DIN 66165-2.

According to a specific embodiment, the grains of the second grain fraction (i.e., the grains having a grain size above the threshold size value) may be subjected to a further comminution cycle by repeating steps 1.3 to 1.6 of the inventive method. Therefore, the inventive method may further comprise the steps of:
- Providing a used refractory product in the form of said second grain fraction, and
- Repeating steps 1.3 to 1.6 of the inventive method, and
- Obtaining a secondary refractory raw material in the form of grains of the used refractory product.

Thus, the grains of the second grain fraction may serve as a used refractory product to be supplied to the comminution device again. Performing the further comminution cycle (i.e., repeating steps 1.3 to 1.6 of the inventive method) with these grains has the advantage that the grains are again impacted with the impact tools of the rotors, thereby further crushing these grains to smaller grain sizes, preferably to sizes below the threshold size value.

According to specific embodiments of the present invention, the secondary refractory raw material obtained in step 1.7 of the inventive method may be further separated into different grain sections. For example, the secondary refractory raw material may be separated into three or more grain sections, such as a first grain fraction having a grain size above 0 mm and up to 1 mm, a second grain fraction having a grain size above 1 mm and up to 3 mm, and a third grain fraction having a grain size above 3 mm and up to 5 mm or 6 mm.

The present invention also relates to a secondary refractory raw material. The inventive secondary refractory raw material has a grain bulk density (GBD) of at least 3.1 g/cm^{3,} preferably at least 3.14 g/cm³. The inventive secondary refractory raw material may have a grain bulk density (GBD) of up to 3.7 g/cm³. This grain bulk density is higher than the grain bulk density of secondary refractory raw materials obtained by conventional crushing methods, such as, e.g., by using a jaw crusher. The secondary refractory raw material according to the present invention can be obtained by the inventive method described herein.

According to the present invention, the term "grain bulk density" refers to the ratio of the mass of a quantity of the material to the total volume of its grains, including the volume of any closed pores within the grains. The grain bulk density is herein determined using the standard DIN EN 993-17:1999.

Preferably, the secondary refractory raw material according to the present invention is selected from the group consisting of:
- a secondary magnesia spinel raw material (i.e., a secondary refractory raw material derived from a magnesia spinel brick) having a grain bulk density of 3.2 g/cm³ or higher, preferably having a grain bulk density of up to 3.5 g/cm³.
- a secondary magnesia chromite raw material (i.e., a secondary refractory raw material derived from a magnesia chromite brick) having a grain bulk density of 3.4 g/cm³ or higher, preferably having a grain bulk density of up to 3.7 g/cm³ and
- a secondary magnesia carbon raw material (i.e., a secondary refractory raw material derived from a magnesia carbon brick) having a grain bulk density of 3.1 g/cm³ or higher, preferably 3.14 g/cm³ or higher, and preferably having a grain bulk density of up to 3.5 g/cm³.

According to other embodiments, the secondary refractory raw material according to the present invention may be a secondary raw material derived from an alumina magnesia carbon brick, or a used alumina silicon carbide carbon brick or a used doloma brick, in each case preferably having a grain bulk density of 3.2 g/cm³ or higher, preferably having a grain bulk density of up to 3.7 g/cm³.

The present invention further relates to the use of the inventive secondary refractory raw material for producing a refractory product. In particular, the present invention relates to the use of the secondary refractory raw material obtained by the inventive method for producing a refractory product. The refractory product is preferably a shaped refractory product. This means that the inventive secondary refractory raw material can be used as a raw material for producing a new refractory product.

In another aspect, the present invention also refers to a method for producing a shaped refractory product, the method comprising the following steps:
- Obtaining a secondary refractory raw material by performing the method as described herein;
- Providing a batch comprising said secondary refractory raw material, said batch optionally further comprising one or more components selected from the group consisting of an organic binder, an inorganic binder, a carbon source and a primary refractory raw material;
- Subjecting said batch to a shaping step to obtain a green body;
- Subjecting the green body to a heat treatment step, such as firing, to obtain a shaped refractory product.

The shaped refractory product may in particular be a magnesia spinel brick, a magnesia carbon brick, a magnesia chromite brick, an alumina magnesia carbon brick, an alumina silicon carbide carbon brick or a doloma brick, depending on the chemical composition of the secondary refractory raw material.

As known in the art, the batch for producing the shaped refractory product may comprise components like binders, such as organic or inorganic binders, which are selected depending on the type of product to be produced. The batch may also comprise a primary refractory raw material. Therefore, the shaped refractory product may be based on a mixture of secondary and primary raw materials. Preferably, the amount of secondary refractory raw materials is larger than 30% by weight, preferably 50% by weight, based on the total weight of primary and secondary refractory raw materials. The batch is prepared as known in the art, e.g., by mixing the batch components together to obtain a homogenized batch. After providing the batch, said batch is subjected to a shaping step, such as a pressing step, to obtain a green body. The green body is then subjected to a heat treatment step to obtain the final shaped refractory product. If the shaped refractory product is a carbon-bonded brick, the temperature treatment step is performed at a temperature at which the carbon components in the batch may coke and thereby form a carbon bond, preferably at a temperature in the range of 200 to 250 °C. If the shaped refractory product is a ceramically bonded brick (i.e. a fired brick), the temperature treatment step is a firing step at a temperature above 1000 °C, preferably above 1200 °C.

Since the obtained shaped refractory product is at least partly based on a secondary refractory raw material, the product may be called a "recycling product" or a "recycling brick".

In another aspect, the present invention also refers to a method for producing an unshaped refractory product, the method comprising the following steps:
- Obtaining a secondary refractory raw material by performing the method as described herein; and
- Providing a refractory mix comprising said secondary refractory raw material, said mix optionally further comprising one or more components selected from the group consisting of an organic binder, an inorganic binder, and a primary refractory raw material.

The present invention is further illustrated below by exemplary and non-limiting figures and examples.
Figure 1 shows a vertical section through a comminution device described herein having two rotors.
Figure 2 shows a vertical section through a comminution device described herein having three rotors.
Figure 3 compares the mineralogic cross-sections of a secondary magnesiachromite refractory raw material obtained by the inventive method (a) and by crushing using a conventional jaw crusher (by).

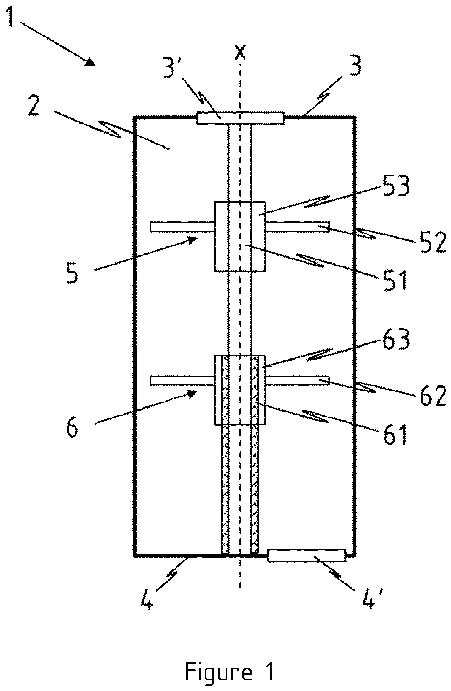

Figure 1 shows an exemplary comminution device 1, which can be used in the method according to the present invention. The comminution device 1 comprises a comminution chamber 2 having a vertical axis x ranging from the top end 3 to the bottom end 4 of the comminution chamber 2. The comminution chamber shown in Figure 1 has a cylindrical shape. The comminution chamber 2 comprises a supply opening 3' located at the top end 3 of the comminution chamber 2, which is used for supplying the used refractory product into the comminution chamber 2. Further, the comminution chamber 2 comprises a discharge opening 4' located at the bottom end 4 of the comminution chamber 2, which is used for retrieving the crushed material out of the comminution chamber 2.

The comminution chamber 2 shown in Figure 1 further comprises two rotors 5, 6 being arranged at different heights along the vertical axis x of the comminution chamber 2. The first rotor 5 is arranged closer to the top end 3 of the comminution chamber 2, whereas the second rotor 6 is arranged below the first rotor 5 and is thus arranged closer to the bottom end 4 of the comminution chamber 2. Each rotor 5, 6 comprises a rotor shaft 51, 61 and each rotor shaft 51, 61 is arranged coaxially with the vertical axis x of the comminution chamber 2. The rotor shafts 51, 61 have a cylindrical shape. Each rotor 5, 6 may be connected to a separate drive system (not shown in Figure 1) via its rotor shaft 51, 61. The rotor drive systems may be located in a separate drive unit (not shown in Figure 1). Each rotor 5, 6 comprises a number of impact tools 52, 62 extending into the comminution chamber 2 in a direction perpendicular to the vertical axis x.

Each rotor 5, 6 further comprises a fastening unit 53, 63 for holding the impact tools 52, 62. Thus, the impact tools 52 of the first rotor 5 are attached to the fastening unit 53 of the first rotor 5. The impact tools 62 of the second rotor 6 are attached to the fastening unit 63 of the second rotor 6. The impact tools 52, 62 shown in Figure 1 are rectangular blocks made of steel and/or ceramic parts and/or composite materials comprising metals and ceramic materials.

The first rotor 5 preferably comprises a lower number of impact tools 52 than the second rotor 6. Figure 1 shows the impact tools 52 of the first rotor 5 to be placed within the same plane perpendicular to the vertical axis x, i.e., on the same height level on rotor 5. Figure 1 further shows the impact tools 62 of the second rotor 6 to be placed within the same plane perpendicular to the vertical axis x, i.e., on the same height level on rotor 6. However, it is also possible to place the impact tools 62 of the second rotor 6 in two or more planes perpendicular to the vertical axis x, i.e., on two or more height levels. It is also possible to place the impact tools 52 of the first rotor 5 and the impact tools 62 of the second rotor on two or more height levels on each rotor 5, 6.

During operation, the rotors 5, 6 shown in Figure 1 are rotated in opposite directions of rotation. Thus, if the first rotor 5 is rotated in clockwise direction, the second rotor 6 is rotated in counterclockwise direction, and vice versa. The rotational speed of the second rotor 6 is preferably higher than the rotational speed of the first rotor 5. The rotational speed of the rotors 5, 6 shown in Figure 1 may range from 300 revolutions per minute to 700 revolutions per minute.

The comminution chamber 2 shown in Figure 1 has a diameter between 1 m and 1.5 m, and a height of 1.5 m to 2.5 m. The impact tools 52, 62 each have a length of 30 cm to 40 cm.

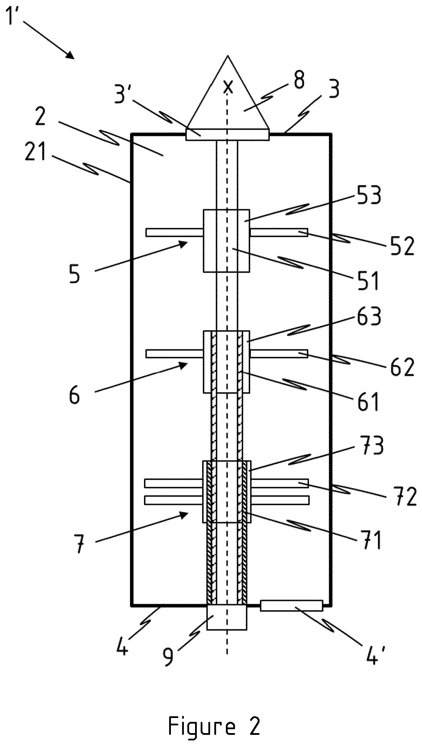

Figure 2 shows a further exemplary comminution device 1'. The comminution device 1' shown in Figure 2 comprises all the features described above for the comminution device 1 shown in Figure 1. Additionally, the comminution device 1' shown in Figure 2 comprises a delivery cone 8 arranged above the supply opening 3' of the comminution chamber 2, for supplying the used refractory product material into the comminution chamber 2 via the supply opening 3'. The comminution device 1' may further comprise an inlet funnel (not shown) to supply the used refractory product material into the delivery cone 8.

The comminution device 1' shown in Figure 2 further comprises a third rotor 7 being located below the second rotor 6, i.e., being located closest to the bottom end 4 of the comminution chamber 2. The rotor 7 comprises a cylindrical rotor shaft 71 which is arranged coaxially with the vertical axis x of the comminution chamber 2. The rotor 7 further comprises a number of impact tools 72 extending into the comminution chamber 2 in a direction perpendicular to the vertical axis x. The rotor 7 further comprises a fastening unit 73 for holding the impact tools 72. Thus, the impact tools 72 of the third rotor 7 are attached to the fastening unit 73 of the third rotor 7. The impact tools 72 shown in Figure 2 are rectangular blocks made of steel and/or ceramic parts and/or composite materials comprising metals and ceramic materials.

Each rotor 5, 6, 7 of the comminution device 1' may be connected to a separate drive system via its rotor shaft 51, 61, 71. In Figure 2, the rotor drive systems are located in a separate drive unit 9, which is located below the bottom end 4 of the comminution chamber 2.

The first rotor 5 may have a lower number of impact tools 52 than the second rotor 6 being located below the first rotor 5, and the second rotor 6 may have a lower number of impact tools 62 than the third rotor 7 being located below the second rotor 6. By way of example, Figure 2 shows the impact tools 52 of the first rotor 5 to be placed within the same plane perpendicular to the vertical axis x, i.e., on the same height level on rotor 5. Figure 2 further shows the impact tools 62 of the second rotor 6 to be placed within the same plane perpendicular to the vertical axis x, i.e., on the same height level on rotor 6, whereas the impact tools 72 of the third rotor 7 are shown to be placed in two planes perpendicular to the vertical axis x, i.e., on two height levels on the rotor 7.

However, it is also possible to arrange the impact tools 52, 62 and 72 of the first rotor 5, the second rotor 6 and the third rotor 7 on more height levels on each rotor than shown in Figure 2. In particular, the impact tools 62 of the second rotor 6 and optionally also the impact tools 52 of the first rotor 5 may be arranged, for example, on two height levels on each rotor 6, 5. The impact tools 72 of the third rotor 7 may also be arranged in three planes perpendicular to the vertical axis x, i.e., on three height levels.

During operation, at least two of the three rotors 5, 6, 7 shown in Figure 2 are rotated in opposite directions of rotation. Preferably, all three rotors 5, 6, 7 are sequentially rotated in alternating directions of rotation, meaning that the second rotor 6 rotates in opposite direction of rotation than the first rotor 5, and the third rotor 7 rotates in opposite direction of rotation than the second rotor 6, i.e., in the same direction of rotation as the first rotor 5. The rotational speed of rotors 5, 6, 7 shown in Figure 2 preferably decreases from the first rotor 5 to the third rotor 7. The rotational speed of the rotors 5, 6, 7 shown in Figure 2 may range from 300 revolutions per minute to 700 revolutions per minute.

The comminution chamber 2 shown in Figure 2 has a diameter between 1 m and 1.5 m, and a height of 1.5 m to 2.5 m. The impact tools 52, 62 and 72 each have a length of 30 cm to 40 cm.

### Example:

Three samples (a-c) of used refractory products were provided:
   a) used magnesia spinel bricks,
   b) used magnesia chromite bricks,
   c) used magnesia carbon bricks

The used refractory bricks (a-c) were provided in the form of breakout material from the lining of high-temperature industrial aggregates. Sample a) was obtained from a cement rotary kiln, while samples b) and c) were obtained from aggregates used in the steel industry (sample b): RH vacuum degasser, sample c): steel ladle). The used refractory bricks (a-c) were pre-crushed using a jaw crusher and sieved using a sieve with a mesh size of 80 mm. Table 1 shows the particle size of the pre-crushed samples.

**Table 1: Particle size of the pre-crushed samples (a-c)**

| **Sample** | **Particle size of pre-crushed samples** |
|---|---|
| a (used magnesia spinel bricks) | 0-80 mm |
| b (used magnesia chromite bricks) | 0-80 mm |
| c (used magnesia carbon bricks) | 0-80 mm |

The pre-crushed samples were used as a feed material for a second crushing step, which was either performed according to the inventive method or by using a conventional jaw crusher. To that end, each of the pre-crushed samples (a-c) was divided into two identical subsamples (I and II). Each subsample exceeded 25 kg in size. Each of the pre-crushed subsamples I (i.e., a(I), b(I) and c (I)) was comminuted according to the inventive method, whereas each of the pre-crushed subsamples II (i.e., a(II), b(II) and c(II)) was comminuted using the conventional jaw crusher.

### Crushing according to the inventive method:

The comminution device 1' as described in Figure 2 was used to comminute the pre-crushed subsamples a(I), b(I) and c(I).

The pre-crushed material was fed into the delivery cone 8 of the comminution device 1' and was directed into the comminution chamber 2 via the supply opening 3'. All three rotors 5, 6, 7 were sequentially rotated in alternating directions of rotation, meaning that the second rotor 6 rotated in opposite direction of rotation than the first rotor 5, and the third rotor 7 rotated in opposite direction of rotation than the second rotor 6, i.e., in the same direction of rotation as the first rotor 5.

For each of the pre-crushed subsamples a(I), b(I) and c(I), the number of impact tools and the settings for the rotational speed of the rotors were chosen such as to obtain a secondary refractory raw material with suitable grain bulk density and grain size distribution (GSD) for the production of new refractory bricks.

For subsample a(I), rotor 5 was equipped with 6 impact tools and was rotated at a rotational speed of 380 rounds per minute, while rotor 6 was equipped with 10 impact tools and was rotated at a rotational speed of 380 rounds per minute and rotor 7 was equipped with 36 impact tools and was also rotated at rotational speed of 380 rounds per minute.

For subsample b(I), the rotors 5, 6 and 7 were each equipped with 6 impact tools, and the rotor 5 was rotated at a rotational speed of 650 rounds per minute, while rotor 6 and rotor 7 were rotated at a rotational speed of 300 rounds per minute. For subsample c(I), the rotors 5, 6 and 7 were each equipped with 6 impact tools, and rotor 5 and rotor 6 were rotated at a rotational speed of 650 rounds per minute, while rotor 7 was rotated at a rotational speed of 300 rounds per minute.

The rotational speeds of the rotors can be converted to tip speeds considering a diameter of 1.5 m (300 RPM = 23 m/s; 380 RPM = 30 m/s; 650 RPM = 51 m/s).

The subsamples a(I), b(I) and c(I) were crushed with the settings described above and the resulting grains were directed out of the comminution chamber 2 via the discharge opening 4'. The grains were then sieved into a first grain fraction with a grain size up to 5 mm and into a second grain fraction with a grain size above 5 mm. The first grain fraction was further sieved into three subfractions (0-1 mm, 1-3 mm, 3-5 mm). The first grain fraction (consisting of said three subfractions) was then used as a secondary refractory raw material for the production of a new refractory product.

### Crushing using a conventional jaw crusher:

The pre-crushed subsamples a(II), b(II) and c(II) were crushed using a jaw crusher (type BB 300 of company Retsch) at various settings (gap between the jaws) and the crushed grains were sieved into a first grain fraction with a grain size up to 5 mm and into a second grain fraction with a grain size above 5 mm. The settings of the jaw crusher were chosen such as to achieve a similar proportion of grains of the first fraction and of the second fraction as with the inventive method.

### Results:

The grain bulk density (GBD) of the secondary refractory raw material resulting from subsamples (I) and (II) was determined for the 3-4 mm fraction, in accordance with ISO 8656-1 (sampling) and ISO 8840 (determination of GBD).

The results show that a significantly higher grain bulk density can be obtained with the inventive method as compared to conventional crushing using a jaw crusher (see Table 2).

**Table 2: Grain bulk densities of secondary refractory raw materials obtained from samples a, b and c**

| | **Grain Bulk Density** | |
|---|---|---|
| **Secondary refractory raw material** | **Inventive Method (subsamples I)** | **Jaw Crusher (subsamples II)** |
| a | 3.24 g/cm³ | 3.11 g/cm³ |
| b | 3.47 g/cm³ | 3.38 g/cm³ |
| c | 3.14 g/cm³ | 3.08 g/cm³ |

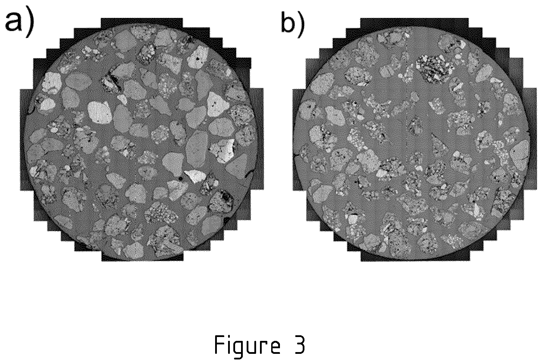

For the secondary refractory raw material obtained from sample b (used magnesia chromite bricks) also mineralogic cross-sections for investigation with an optical microscope where prepared. Figure 3 shows a comparison of the secondary refractory raw material obtained with the inventive method (Figure 3a) and with the conventional jaw crusher (Figure 3b). It is evident that the secondary refractory raw material obtained with the inventive method comprises significantly more fully liberated grains in comparison to the secondary refractory raw material obtained with the jaw crusher. This shows that the secondary refractory material obtained with the inventive method is of high quality and can be used in a high amount for the production of new refractory products.

## Claims

1. A method for obtaining a secondary refractory raw material, said method comprising the following steps:
1.1. Providing a used refractory product;
1.2. Providing a comminution device (1, 1') comprising a comminution chamber (2),
1.2.1. wherein a vertical axis (x) is defined ranging from the top end (3) to the bottom end (4) of the comminution chamber (2),
1.2.2. the comminution chamber comprising a supply opening (3') located at the top end (3) of the comminution chamber (2), and a discharge opening (4') located at the bottom end (4) of the comminution chamber (2),
1.2.3. the comminution chamber (2) further comprising at least two rotors (5, 6, 7) being arranged at different heights along the vertical axis (x) of the comminution chamber (2),
1.2.4. each rotor (5, 6, 7) comprising a rotor shaft (51, 61, 71), each rotor shaft (51, 61, 71) being arranged coaxially with the vertical axis (x) of the comminution chamber (2), and
1.2.5. each rotor (5, 6, 7) comprising a number of impact tools (52, 62, 72) extending into the comminution chamber (2), wherein the impact tools (52, 62, 72) preferably extend into the comminution chamber (2) in a direction perpendicular to the vertical axis (x);
1.3. Supplying the used refractory product to the comminution chamber (2) of the comminution device (1) via the supply opening (3) and directing the used refractory product through the comminution chamber (2);
1.4. Rotating at least two of said rotors (5, 6, 7) in opposite directions of rotation around the vertical axis (x), while the used refractory product is directed through the comminution chamber (2);
1.5. Impacting the used refractory product with the impact tools (52, 62, 72) of the rotors (5, 6, 7) to crush the used refractory product into grains;
1.6. Directing the grains of the used refractory product out of the comminution chamber (2) via the discharge opening (4'); and
1.7. Obtaining a secondary refractory raw material in the form of grains of the used refractory product.

2. The method according to claim 1, wherein the used refractory product is provided in the form of a granulate with a maximum particle size of 100 mm or lower, preferably 80 mm or lower.

3. The method according to any one of claims 1 to 2, wherein the used refractory product is a breakout material from the lining of a high-temperature industrial aggregate, preferably a cement rotary kiln, a metallurgical aggregate, or an aggregate for the treatment of molten glass.

4. The method according to any one of claims 1 to 3, wherein the used refractory product is selected from the group consisting of used magnesia spinel bricks, used magnesia chromite bricks, used magnesia carbon bricks, used alumina magnesia carbon bricks, used alumina silicon carbide carbon bricks and used doloma bricks.

5. The method according to any one of claims 1 to 4, wherein the comminution chamber (2) has a cylindrical shape, wherein the comminution chamber (2) preferably has a diameter between 1 m and 2.5 m, and wherein the comminution chamber (2) preferably has a height between 1.5 m and 3 m.

6. The method according to any one of claims 1 to 5, wherein each rotor (5, 6, 7) further comprises a fastening unit (53, 63, 73) being *mounted on the rotor shaft* (51, 61, 71) of each rotor (5, 6, 7), wherein the impact tools (52, 62, 72) are attached to said fastening unit (53, 63, 73).

7. The method according to any one of claims 1 to 6, wherein the number of impact tools (52, 62, 72) of said rotors (5, 6, 7) increases from the rotor (5) being arranged closest to the top end (3) of the comminution chamber (2) to the rotor (7) being arranged closest to the bottom end (3) of the comminution chamber (2).

8. The method according to any one of claims 1 to 7, wherein the at least two rotors (5, 6, 7) consist of a first rotor (5), a second rotor (6) and a third rotor (7), the first rotor (5) being arranged closest to the top end (3) of the comminution chamber (2), the third rotor (7) being arranged closest to the bottom end (4) of the comminution chamber, and the second rotor (6) being arranged between the first rotor (5) and the third rotor (7), wherein the second rotor (6) is rotated in opposite direction of rotation than the first rotor (5), and wherein the third rotor (7) is rotated in opposite direction of rotation than the second rotor (6).

9. The method according to any one of claims 1 to 8, wherein the rotational speed of said rotors (5, 6, 7) decreases from the rotor (5) being arranged closest to the top end (3) of the comminution chamber (2) to the rotor (7) being arranged closest to the bottom end (4) of the comminution chamber (2).

10. The method according to any one of claims 1 to 9, wherein the rotors (5, 6, 7) are rotated at a rotational speed between 300 and 1600 revolutions per minute, preferably between 300 and 700 revolutions per minute.

11. The method according to any one of claims 1 to 10, wherein said secondary refractory raw material is obtained in step 1.7 by separating the grains of the used refractory product resulting from step 1.6 into two grain fractions, the first grain fraction having a grain size up to a threshold size value and the second grain fraction having a grain size above said threshold size value, wherein the first grain fraction represents the secondary refractory raw material, and wherein said threshold size value preferably ranges from 5 mm to 7 mm, even more preferably said threshold size value is 5 mm or 6 mm.

12. The method according to claim 11, wherein said method further comprises the steps of:
12.1. Providing a used refractory product in the form of said second grain fraction, and
12.2. Repeating steps 1.3 to 1.6, and
12.3. Obtaining a secondary refractory raw material in the form of grains of the used refractory product.

13. A secondary refractory raw material, wherein said secondary refractory raw material has a grain bulk density of at least 3.1 g/cm³, preferably of at least 3.14 g/cm³, preferably wherein said secondary refractory raw material is selected from the group consisting of a secondary magnesia spinel raw material having a grain bulk density of 3.2 g/cm³ or higher, a secondary magnesia chromite raw material having a grain bulk density of 3.4 g/cm³ or higher, and a secondary magnesia carbon raw material having a grain bulk density of 3.1 g/cm³ or higher, preferably 3.14 g/cm³ or higher.

14. Use of the secondary refractory raw material according to claim 13 for producing a refractory product.

15. A method for producing a shaped refractory product, the method comprising the following steps:
15.1. Obtaining a secondary refractory raw material by performing the method according to any one of claims 1 to 12;
15.2. Providing a batch comprising said secondary refractory raw material, said batch optionally further comprising one or more components selected from the group consisting of an organic binder, an inorganic binder, a carbon source and a primary refractory raw material;
15.3. Subjecting said batch to a shaping step to obtain a green body;
15.4. Subjecting the green body to a heat treatment step, such as firing, to obtain a shaped refractory product.
